(19) Europäisches Patentamt / European Patent Office / Office européen des brevets

(11) **EP 2 001 957 B1**

(12) **EUROPEAN PATENT SPECIFICATION**

(45) Date of publication and mention
of the grant of the patent:
**27.07.2011 Bulletin 2011/30**

(51) Int Cl.:
***C08L 83/04*** (2006.01)

(21) Application number: **07740959.7**

(22) Date of filing: **28.03.2007**

(86) International application number:
**PCT/JP2007/057523**

(87) International publication number:
**WO 2007/119669 (25.10.2007 Gazette 2007/43)**

(54) **HEAT-CURABLE SILICONE RUBBER COMPOSITION AND A CURED BODY THEREOF**

WÄRMEHÄRTBARE SILIKONKAUTSCHUKZUSAMMENSETZUNG UND HARTKÖRPER DARAUS

COMPOSITION DE CAOUTCHOUC DE SILICONE THERMODURCISSABLE ET CORPS POLYMÉRISÉ A BASE DE CELLE-CI

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **31.03.2006 JP 2006098490**

(43) Date of publication of application:
**17.12.2008 Bulletin 2008/51**

(73) Proprietor: **Dow Corning Toray Co., Ltd.
Tokyo 100-0005 (JP)**

(72) Inventors:
• **HASEGAWA, Chiichiro
Ichihara-shi, Chiba 299-0108 (JP)**
• **BABA, Katsuya
Ichihara-shi, Chiba 299-0108 (JP)**

(74) Representative: **Gillard, Richard Edward
Elkington and Fife LLP
Thavies Inn House
3-4 Holborn Circus
London EC1N 2HA (GB)**

(56) References cited:
**JP-A- 2000 160 014     US-A- 4 743 671
US-B1- 6 294 636**

**Description**

Technical Field

The present invention relates to a curable silicone rubber composition and to a cured body of a silicone rubber obtained by curing the aforementioned composition.

Background Art

A halogen-substituted benzoyl peroxide is a curing agent that is normally used for thermally curing a silicone rubber composition by extruding, calendering, or a similar process performed under normal pressure. However, because the use of halogen-substituted benzoyl peroxide is associated with safety and health hazard problems caused by products of decomposition of the halogen-substituted benzoyl peroxide, there is a need in fmding an appropriate substitute for this compound.

Japanese Unexamined Patent Application Publication (hereinafter referred to as "Kokai") S62-185750 (equivalent to US4743671) describes a method of cross-linking an organopolysiloxane by using bis (4-methylbenzoyl) peroxide. However, if the cross-linking agent composed of bis (4-methylbenzoyl) peroxide contains coarse grains, this may cause formation of voids and agglomerated particles in the form of white spots that spoil the appearance of products molded from the silicone rubber composition. Furthermore, provision of such coarse grains may impair reliability of electrical characteristics, such as resistance to high-voltage breakdown, of the products.

Kokai H11-246763 (equivalent to US6294636) describes a silicone composition that contains a bis (paramethylbenzoyl) peroxide having particles of a specified maximum and average size. Kokai 2000-53918 describes a silicone rubber composition for coating electric wires that contains a p-methylbenzoyl peroxide having grains of a specified maximum size. Kokai 2000-160014 discloses a silicone composition that contains bis (p-methylbenzoyl) peroxide having a specified maximum grain size and a specified average size of primary grains. Kokai 2003-327830 describes a cross-linking agent for silicone rubber that contains 4-methylbenzoyl perioxide having primary grains of a specified average size. The average size of primary grains is determined by observing the primary grains of 4-methylbenzoyl peroxide dispersed in a silicone oil under an optical microscope.

However, all existing methods used for inhibiting development of voids and surface defects in the form of whitespot-like agglomerated particles as well as existing methods for preventing decrease in reliability of resistance to high-voltage breakdown and decrease of electric insulating properties are still insufficient and need further improvement. Furthermore, controlling the dimensions of particles contained in a curing agent composed of bis (4-methylbenzoyl) peroxide and silicone oil is not an easy task since the primary particles agglomerate into large soft aggregates. Moreover, the soft aggregates of primary particles themselves may be the cause of the above-described problems.

Disclosure of Invention

It is an object of the present invention to provide a heat-curable silicone rubber composition suitable for forming molded products which are free of defects in appearance and in physical properties. It is another object to provide a molded product obtained from the above composition.

[Means for the Solution of the Problems]

A heat-curable silicone rubber composition of the present invention includes a curing agent characterized by having a total acid value not exceeding 1.0 mg KOH/g and comprising a mixture of a diorganopolysiloxane with bis (4-methylbenzoyl) peroxide produced from 4-methylbenzoyl chloride of 99.7% or higher purity as a starting material. Among aforementioned diorganopolysiloxane, a dimethylpolysiloxane is preferable.

A method of the invention for manufacturing a cured body of a silicone rubber is characterized by thermally curing a heat-curable silicone rubber composition of the invention.

A silicon-rubber product of the invention is characterized by the fact that it is produced by the method of the invention. A product of the invention may comprise an electric wire coated with a layer of a cured heat-curable silicone rubber composition.

A curing agent of the invention for the heat-curable silicone rubber composition is characterized by including a curing agent that has a total acid value not exceeding 1.0 mg KOH/g, the aforementioned curing agent comprising a mixture of a diorganopolysiloxane with bis (4-methylbenzoyl) peroxide produced from 4-methylbenzoyl chloride of 99.7% or higher purity used as a starting material.

The heat-curable silicone rubber composition of the invention is characterized by the fact that it is suitable for the production of cured silicone-rubber bodies which have excellent appearance and are free of white-spot-like agglomerated particles and voids. Furthermore, the thermally-curable silicone rubber composition of the invention is suitable for use as a material for forming silicone-rubber coatings on electric wires, as well as for coating electric elements and parts with coating layers, and for manufacturing cured silicone-rubber products that are characterized by high electric-breakdown resistance and reliable electric insulating properties. The cured silicone rubber products produced by curing the aforementioned heat-curable silicone rubber composition are characterized by an attractive appearance which is free of voids and white-spot defects resulting from agglomerated particles and by excellent electrical insulating properties and resistance to voltage breakdown.

Best Mode for Carrying Out the Invention

A curing agent that is contained in the heat-curable silicone rubber composition of the invention is characterized by comprising a mixture of a diorganopolysiloxane with bis (4-methylbenzoyl) peroxide. The aforementioned bis (4-methylbenzoyl) peroxide is produced from a 4-methylbenzoyl chloride of 99.7% or higher purity as a starting material. The mixture of the diorganopolysiloxane with bis (4-methylbenzoyl) peroxide has a total acid value not exceeding 1.0 mg KOH/g. If the aforementioned bis (4-methylbenzoyl) peroxide is produced from a starting material such as 4-methylbenzoyl chloride that has purity below 99.7% or if the total acid value of the mixture of the diorganopolysiloxane with bis (4-methylbenzoyl) peroxide exceeds 1.0 mg KOH/g, then a cured silicone rubber body produced by curing such heat-curable silicone rubber composition will either have voids and white spots on its surface or will have non-uniform physical properties and reduced resistance to voltage breakdown along with increased frequency of sparking.

The bis (4-methylbenozyl) peroxide can be produced by a known method, e.g., by causing a reaction between a 4-methylbenzoyl chloride and hydrogen peroxide in the present of an alkali catalyst. For example, Kokai H11-116808 discloses a method of manufacturing bis (methylbenzoyl) peroxide by conducting the aforementioned reaction for 1 to 4 hours at a temperature of 0 to 30°C with the use of hydrogen peroxide in a 1 to 1.3 mole ratio, and with the use of an alkali agent, e.g., sodium hydroxide, in a 1 to 1.5 mole ratio to 1 mole of the methylbenzoyl chloride. Furthermore, Kokai 2003-327830 discloses a method of manufacturing bis (4-methylbenzoyl) peroxide by causing a reaction between 4-methylbenzoyl chloride and sodium peroxide. The reaction required that purity of the bis (4-methylbenzoyl) peroxide as a starting material for 4-methylbenzoyl peroxide be higher than 99.7% and that the reaction be practically free of isomers such as 2-methylbenzoyl chloride or 3-methylbenzoyl chloride.

Mixing of the bis (4-methylbenzoyl) peroxide and the diorganopolysiloxane can be carried out, e.g., by washing the bis (4-methylbenzoyl) peroxide produced by the above-described method with water, removing the water, dispersing the bis (4-methylbenzoyl) peroxide in the diorganopolysiloxane, and passing the product through a 3-roll mill. Another known method of mixing consists of producing bis (4-methylbenzoyl) peroxide in the presence of a diorganopolysiloxane, washing the product with water, and then removing the water. Kokai 2003-327830 describes a method of mixing that consists of washing the bis (4-methylbenzoyl) peroxide obtained by the method described above, dissolving it in chloroform, recrystallizing with methanol, dispersing in a dimethylsilicone oil, and passing through a 3-roll mill.

From the viewpoint of safety and ease of dispersion in the silicone rubber composition, it is recommended to have the content of the bis (4-methylbenzoyl) peroxide in the mixture of the bis (4-methylbenzoyl) peroxide with the diorganopolysiloxane in an amount of 20 to 80 mass %, preferably 40 to 60 mass %.

The diorganopolysiloxane which is mixed with the bis (4-methylbenzoyl) peroxide is a component that imparts to the aforementioned curing agent such properties as stability and improved dispersibility in the silicone rubber composition. This diorganopolysiloxane should have a linear or a partially branched linear molecular structure and a viscosity in the range of 50 mPa·s to 1,000,000 mPa·s at 25°C, and preferably in the range of 100 mPa·s to 100,000 mPa·s at 25°C. Silicon-bonded groups are represented by methyl, ethyl, propyl, butyl, hexyl, or similar alkyl groups with 1 to 6 carbon atoms; phenyl, naphthyl, or similar aryl groups; tolyl, benzyl, or similar aralkyl groups; 3,3,3-trifluoropropyl, or similar halogen-substituted hydrocarbons; vinyl, allyl, propenyl, hexenyl, or similar alkenyl groups. Most preferable are methyl groups.

The total acid value of the mixture of bis (4-methylbenzoyl) peroxide and organopolysiloxane is measured by the method described below in accordance with JIS K-2501:1980 (Test Method for the Neutralization Value of Petroleum Products and Lubricating Oils).

More specifically, a precisely weighed specimen of m (g) was combined with a 1:1 mixture of acetone and distilled water and was uniformly dissolve in the mixture. After addition of a phenolphthalein indicator, the product was titrated in an atmosphere of inert gas with a normal N/20 potassium hydroxide solution. The amount of the N/20 potassium hydroxide solution required for titration was designated $v^1$, while the titrated amount (ml) corresponding to $v^1$ for the blank test with the addition of the phenolphthalein to the aforementioned 1:1 mixture of acetone and distilled water was designated v°.

The total acid value was calculated by means of the formula given below where F is 2.8 which is found by multiplying KOH molecular weight (56.1) by normality of the potassium hydroxide solution (1/20).

$$\text{Total acid value (KOH mg/g)} = F \times (v^1 - v^0)/m$$

The mixture of the bis (4-methylbenzoyl)-peroxide and diorganopolysiloxane can be combined with various conventional additives, provided that these additives do not affect the stability of the bis (4-methylbenzoyl) peroxide and the properties of the heat-curable silicone rubber composition or the cured silicone body. Such additives may be exemplified by silica, quartz powder, or similar inorganic fillers.

The heat-curable silicone rubber composition of the invention is characterized by including a curing agent that comprises a mixture of the aforementioned bis (4-methylbenzoyl) peroxide and diorganopolysiloxane. The heat-curable silicone rubber composition itself preferably comprises an organopolysiloxane (A), a fine silica powder (B), and the aforementioned curing agent (C).

The organopolysiloxane (A) is the main component of the aforementioned heat-curable silicone rubber composition. This component is cross-linked with the use of the bis (4-methylbenzoyl) peroxide contained in component (C). The diorganopolysiloxane of component (A) may have a linear or a partially branched linear molecular structure. Component (A) should have in one molecule at least two alkenyl groups, such as a vinyl group, allyl group, propenyl group, hexenyl group, or the like. The alkenyl groups may be present on the molecular terminal, in a side molecular chain, or in both side and terminal molecular chains. Besides alkenyl groups, silicon-bonded groups may be represented by methyl groups, ethyl groups, propyl groups, butyl groups, hexyl groups, or similar alkyl groups having 1 to 6 carbon atoms; phenyl groups, naphthyl groups, or similar aryl groups; tolyl groups, benzyl groups, or similar aralkyl groups; 3,3,3-trifluoropropyl groups, or similar halogen-substituted hydrocarbon groups. Most preferable are methyl groups. A small amount of hydroxyl groups also may be attached to molecular terminals.

The diorganopolysiloxane of component (A) may be exemplified by the following specific compounds: a copolymer of a dimethylsiloxane and methylvinylsiloxane capped at both molecular terminals with hydroxyl groups; a copolymer of a methylphenylsiloxane and methylvinylsiloxane capped at both molecular terminals with hydroxyl groups; a copolymer of a diphenylsiloxane and methylvinylsiloxane capped at both molecular terminals with hydroxyl groups; a copolymer of a diphenylsiloxane and vinylphenylsiloxane capped at both molecular terminals with hydroxyl groups; a dimethylpolysiloxane capped at both molecular terminals with dimethylvinylsiloxy groups; a copolymer of a dimethylsiloxane and methylvinylsiloxane capped at both molecular terminals with dimethylvinylsiloxy groups; a methylphenylpolysiloxane capped at both molecular terminals with dimethylvinylsiloxy groups; a copolymer of a methylphenylsiloxane and methylvinylsiloxane capped at both molecular terminals with dimethylvinylsiloxy groups; a copolymer of methylvinylsiloxane and methylphenylsiloxane capped at both molecular terminals with dimethylvinylsiloxy groups; a copolymer of a methylvinylsiloxane and (3,3,3-trifluoropropyl) methylsiloxane capped at both molecular terminals with hydroxyl groups; a copolymer of methylvinylsiloxane, dimethylsiloxane, and (3,3,3-trifluoropropyl) methylsiloxane capped at both molecular terminals with hydroxyl groups; a (3,3,3-trifluoropropyl) methylpolysiloxane capped at both molecular terminals with dimethylvinylsiloxy groups; and a copolymer of a methylvinylsiloxane and (3,3,3-trifluoropropyl) methylsiloxane capped at both molecular terminals with dimethylvinylsiloxy groups.

At a temperature of 25°C, component (A) may comprise a liquid or a semi-solid uncured rubber-like substance, but a rubber-like substance having a weight-average molecular weight exceeding 100,000 is preferable. It is more preferable, if the weight-average molecular weight of the uncured rubber-like substance is in the range of 200,000 to 9,000,000, and most preferable if the weight-average molecular weight is in the range of 450,000 to 4,500,000. The weight-average molecular weight was measured by gel permeation chromatography (GPC) and recalculated in reference to polystyrene.

Fine silica powder (B) is a component that is used for imparting hardness and excellent mechanical strength to a product obtained by curing the heat-curable silicone rubber composition of the invention. The fine silica powder can be represented by fumed silica, or a similar dry-process silica, precipitated silica, or a similar wet-process silica, or a fine silica powder the surface of which is hydrophobized with organochlorosilane, hexaorganosilazane, diorganocyclopolysiloxane, or a similar organic silicon compound. It is preferable for this component to have a specific surface area no less than 50 $m^2$/g and to be used in an amount of 10 to 100 parts by mass per 100 parts by mass of component (A). If component (B) is used in an amount less than 10 parts by mass, this will reduce mechanical strength of the molded product, and if it is used in an amount exceeding 100, it will be difficult to mix it with component (A).

The curing agent of component (C) which is a mixture of bis(4-methylbenzoyl) peroxide with an organopolysiloxane was described above. It is recommended to add this component in an amount of 0.05 to 10 parts by mass, preferably 0.5 to 1 parts by mass per 100 parts by mass of component (A). Curing agent (C) can be used in a mixture with other curing agents such as those containing organic peroxides, organohydrogenpolysiloxanes with platinum-type catalysts, or similar hydrosilylation catalysts.

The heat-curable silicone rubber composition of the invention may consist of components (A) to (C). If necessary, however, these components may also be combined with various additives normally used in conjunction with conventional silicone rubber compositions. Such additives may comprise, e.g., diorganosiloxane oligomers capped at both molecular terminals with silanol groups, hexaorganodisilazane, or similar crepe-hardening inhibitors; other reinforcement fillers; diatomaceous earth, quartz powder, mica, clay, glass beads, calcium carbonate, aluminum oxide, titanium dioxide, γ-type iron sesquioxide, triiron tetroxide, zinc oxide, carbon black, or a similar inorganic filler; platinum compounds, zinc carbonate, manganese carbonate, or similar flame retardants; iron oxide, cerium hydroxide, cerium oxide, cerium dimethyl silanolate, cerium salts of fatty acids, or similar heat-resistant agents; stearic acid, zinc stearate, calcium stearate, or similar higher fatty acids or their metal salt, or other mold-release agents; pigments; foaming agents, etc. These additives can be added in amounts which are not contradictory to the purposes of the invention.

The heat-curable silicone rubber composition of the invention is easily prepared by uniformly mixing all three aforementioned components (A) to (C). However, components (A) and (B) can be first premixed and then component (C) can be added to the mixture. If component (A) is a rubber-like substance, first components (A) and (B) can be uniformly kneaded in a batch-type mixer such as a kneader-mixer, or in a continuous-type kneader such as a double-screw continuous kneader-extruder, and then component (C) can be added to the mixture with the use of a two-roll mill, or the like. If component (A) is liquid, components (A) and (B) can be uniformly mixed with the use of a planetary mixer or a flow-jet mixer, and the mixture is combined with component (C). Mixing of components (A) and (B) can be carried out at a temperature from room temperature to 250°C, preferably from room temperature to 180°C. It is recommended to add component (C) at a temperature below 60°C, preferably below 40°C.

Manufacturing of a product [of the invention] cured from the aforementioned heat-curable silicone rubber composition can be carried out by various methods, which are selected based on the form of the composition and purpose of the cured product, e.g., by extrusion molding, calender molding, compression molding, casting molding, injection molding, or by any other conventional molding method. Since the heat-curable silicone rubber composition can produce favorable products under normal pressure and in open air, most suitable among the aforementioned methods are extrusion with curing by heating under normal pressure and calender molding. In case of curing by heating, it is recommended to cure the heat-curable silicone rubber composition of the invention at a temperature in the range of 150°C to 600°C. Since the heat-curable silicone rubber composition of the invention can be cured with a rather high speed of curing, the cured products can be formed by compression molding or pressure molding that require low heating temperatures, or by compression molding or injection molding processes with a shortened cycle time. In such processes, which require the use of a mold curing can be carried out at a temperature in the range of 80 to 250°C.

The aforementioned molded silicone products may comprise monolithic silicone rubber bodies in the form of tubes or sheets, or may comprise composite bodies where the silicone rubber is combined with various plastics, rubbers, metals, glass, fabrics, etc. A fevorable example of a composite product is an electric wire that has a conductive core and a silicone-rubber coating insulation layer.

[Examples]

The invention will be further described with reference to application and comparative examples. It is understood that the invention is not limited by the aforementioned application and comparative examples.

[Preparation of Curing Agent]

A curing agent was prepared by mixing 50 parts by mass of bis (4-methylbenzoyl) peroxide powder prepared from a 4-methylbenzoyl chloride having a purity in the range of 99.4% to 99.9% and 50 parts by mass of a dimethylpolysiloxane having a viscosity of 12,500 mPa·s and capped at both molecular terminals with trimethylsiloxy groups, and then passing the mixture through a three-roll mill.

[Preparation of Heat-Curable Silicone Rubber Composition No.1]

A kneader-mixer was loaded with the following components: 100 parts by mass of an uncured organopolysiloxane rubber (weight-average molecular weight of 350,000) capped at both molecular terminals with dimethylvinylsiloxy groups and composed of 99.6 mole % of dimethylsiloxane units and 0.4 mole % of methylvinylsiloxane unit; 30 parts by mass of a dimethylsiloxane oligomer capped at both molecular terminals with dimethylhydroxysilyl groups and having a viscosity of 60 mPa·s, and 70 parts by mass of a fumed silica having a specific surface area of 300 m$^2$/g. The components were then kneaded to uniformity with heating. Following this, 1.3 parts by mass of a curing agent having characteristics shown in Table 1 were added to the mixture in a two-roll mill, and a heat-curable silicone rubber composition No.1 was prepared.

[Preparation of Heat-Curable Silicone Rubber Composition No.2]

A kneader-mixer was loaded with the following components: 100 parts by mass of an uncured organopolysiloxane rubber (a weight-average molecular weight of 350,000) capped at both molecular terminals with dimethylvinylsiloxy groups and composed of 99.6 mole % of dimethylsiloxane units and 0.4 mole % of methylvinylsiloxane unit; 11 parts by mass of a dimethylsiloxane oligomer capped at both molecular terminals with dimethylhydroxysilyl groups and having a viscosity of 60 mPa·s at 25°C, 45 parts by mass of a fumed silica having a specific surface area of 200 $m^2$/g, and 10 parts by mass of a quartz powder with an average particle size equal to 10 $\mu$m. The components were then kneaded to uniformity with heating. Following this, 1.3 parts by mass of a curing agent having characteristics shown in Table 2 were added to the mixture in a two-roll mill, and a heat-curable silicone rubber composition No.2 was prepared.

[Application Example 1, Comparative Examples 1 to 4]

Aforementioned heat-curable silicone rubber composition No. was deaerated with the use of a two-roll mill, and then the composition was preformed into a 100 mm-wide, 100 mm-long, and 1 mm-thick test piece which was cured by holding for 20 min. in an oven at 150°C. The total number of agglutinated particles having a shape of white spots with dimensions greater than 50 $\mu$m and located in the center 5 cm x 5 cm area of the obtained test piece was calculated by visually observing this area under a digital microscope VH-6200 (the product of Keyence Corporation). The results are shown in table 1.

[Application Example 2, Comparative Examples 5 to 8]

Aforementioned heat-curable silicone rubber composition No. 2 was loaded into a single-axis extruder having an inner diameter of 65 mm. In the cross head of the extruder the silicone rubber composition was applied onto a 0.9 mm-diameter core wire. The coating wire was then passed with feeding speed of 20 m/min through a hot-air-flow type heating furnace (total length of 7.2 m) working at a temperature of 400 °C. As a result, a silicone-rubber-coated electric wire having an outer diameter of 2.2 mm was produced. The wire obtained after the above-described vulcanization process was fed to a spark tester, and spark frequency was measured. Furthermore, the obtained electric wire coated with the silicone rubber coating was measured with regard to insulation-breakdown voltage. The results of the test are shown below in Table 2.

Purity of the 4-methylbenzoyl peroxide, the total acid value of the mixture of bis (4-methylbenzoyl) peroxide and dimethylpolysiloxane, the spark frequency, and the insulation-breakdown voltage of the electric wires coated with the silicone-rubber layer were measured by the methods described below.

[Purity of the 4-Methylbenzoyl Peroxide]

This characteristic was measured by gas chromatography.

[Total Acid Value]

This characteristic was measured as described below in accordance with JIS K-2501: 1980 "(Test Method for the Neutralization Value of Petroleum Products and Lubricating Oils).

A 200 ml-capacity Erlenmeyer flask equipped with a plug and containing 1.0 g of the precisely weighed curing agent (the sampled amount was designated "m" (g)) was loaded with 30 ml of acetone and 30 ml of distilled water. The content was shaken to form a uniform solution. Three drops of a phenolphthalein indicator were added, and while the air contained in the Erlenmeyer flask was replaced with nitrogen, titration was carried with an N/20 normal solution of potassium hydroxide by using an auto burette. The amount (ml) of the N/20 normal solution of potassium hydroxide required for titration was designated $v^1$. A uniform solution was prepared by shaking 30 ml of acetone with 30 ml of distilled water. Three drops of the phenolphthalein indicator were added, and a blank test was carried out under the same conditions as above. The titrated amount (ml), which in the working test corresponded to $v^1$, in the blank test was designated $v°$. The total acid value was calculated by means of the formula given below where F is 2.8 which is found by multiplying KOH molecular weight (56.1) by normality of the potassium hydroxide solution (1/20).

$$\text{Total acid value (KOH mg/g)} = F \times (v^1 - v^0)/m$$

[Spark Frequency]

This characteristic was measured based on JIS C3005:2000 "Test Methods for Rubber or Plastic Insulated Wires and Cables", 4.6 Insulation Resistance Voltage c) Sparking. The spark frequency was measured at voltages shown in Table 1 while the wires were fed during 1 min. at a rate of 20 m/min.

[Insulation-Breakdown Voltage of Electric Wires Coated with Silicone-Rubber Insulation]

This test was conducted in accordance with JIS C3005:2000 "Test Methods for Rubber or Plastic Insulated Wires and Cables", 4.6 Insulation Resistance Voltage a) in Water. A 1 m-long piece of an electric wire was immersed into water for 1 hour, and then the voltage capable of breaking through the insulation coating of the wire was measured by applying an AC voltage and increasing it with a rate of 1 kV/sec. The test was conducted on Samples 1 to 5 with calculation of the average value.

[Table 1]

|  | Apl. Ex. 1 | Comp. Ex. 1 | Comp. Ex. 2 | Comp. Ex. 3 | Comp. Ex. 4 |
|---|---|---|---|---|---|
| Purity of 4-methylbenzoyl peroxide (%) | 99.9 | 99.9 | 99.9 | 99.5 | 99.4 |
| Total acid value of the curing agent (KOHmg/g) | 0.86 | 1.11 | 1.27 | 0.78 | 1.07 |
| Number of agglomerated particles of predetermined sizes (number/25 cm$^2$) | | | | | |
| Size: 50 $\mu$m to 70 $\mu$m | 3 | 38 | 77 | 63 | 88 |
| Size: 70 $\mu$m to 90 $\mu$m | 0 | 20 | 26 | 23 | 36 |
| Size: 90 $\mu$m to 110 $\mu$m | 0 | 3 | 5 | 3 | 22 |
| Size: 110 $\mu$m to 130 $\mu$m | 0 | 0 | 1 | 0 | 9 |

[Table 2]

|  | Apl. Ex. 2 | Comp. Ex. 5 | Comp. Ex. 6 | Comp. Ex. 7 | Comp. Ex. 8 |
|---|---|---|---|---|---|
| Purity of4-methylbenzoyl peroxide (%) | 99.9 | 99.9 | 99.9 | 99.5 | 99.4 |
| Total acid value of the curing agent (KOHmg/g) | 0.86 | 1.11 | 1.27 | 0.78 | 1.07 |
| Spark frequency (number/min) | | | | | |
| 11 kV | 0 | 0 | 0 | 0 | 0 |
| 12kV | 0 | 0 | 5 | 2 | 3 |
| 13 kV | 0 | 1 | 11 | 8 | 18 |
| 14kV | 0 | 4 | 43 | 23 | 70 |
| 15 kV | 15 | 48 | 64 | 50 | 169 |
| Insulation-breakthrough voltage (kV) | | | | | |
| Sample 1 | 11.4 | 9.5 | 10.1 | 9.8 | 9.4 |
| Sample 2 | 11.1 | 9.7 | 9.1 | 10.1 | 9.6 |
| Sample 3 | 10.2 | 9.1 | 9.7 | 9.5 | 9.7 |
| Sample 4 | 10.5 | 9.2 | 9.5 | 9.7 | 10.2 |

(continued)

| Insulation-breakthrough voltage (kV) | | | | | |
|---|---|---|---|---|---|
| Sample 5 | 11.8 | 9.5 | 9.5 | 10.3 | 9.1 |
| Average | 11.0 | 9.4 | 9.6 | 9.9 | 9.6 |

As can be seen from Application Example 1 and Comparative Examples 1 and 2, the heat-curable silicone rubber composition that contains a curing agent with the total acid value below 1.0 KOH/g produces agglomerated particles which are smaller in size and smaller in number as compared to the use the heat-curable silicone rubber composition that contains a curing agent with the total acid value higher than 1.0 KOH/g. Therefore the composition of the first type produces cured bodies of silicone rubber which have better appearance. Furthermore, increase in the total acid value leads to an increase in the number of large coarse particles contained in the sample and thus lead to an increase in the number of agglomerated particles.

Comparison of Application Example 1 with Comparative Example 3 shows that the heat-curable silicone rubber composition that contains a curing agent that contains bis (4-methylbenzoyl) peroxide obtained from 4-methylbenzoyl chloride as a starting material having a purity higher than of 99.7%, produces agglomerated particles which are smaller in size and smaller in number as compared to the use the heat-curable silicone rubber composition that contains a curing agent with bis (4-methylbenzoyl) peroxide obtained from 4-methylbenzoyl chloride as a starting material having a purity lower than 99.7%.

As can be seen from comparison of Application Example 1 with Comparative Examples 4, the heat-curable silicone rubber composition that contains a curing agent with the total acid value below 1.0 KOH/g prepared from 4-methylbenzoyl chloride as a starting material having a purity higher than 99.7% produces agglomerated particles which are smaller in size and smaller in number as compared to the use the heat-curable silicone rubber composition that contains a curing agent with the total acid value higher than 1.0 KOH/g and prepared from 4-methylbenzoyl chloride as a starting material having a purity lower than 99.7%.

As can be seen from comparison of Application Example 2 with Comparative Examples 5 and 6, the electric wires insulated with the silicone-rubber coating made from the heat-curable silicone rubber composition that contains a curing agent with the total acid value below 1.0 KOH/g have excellent reliability as they have a smaller spark frequency and a higher insulation-breakthrough voltage than the electric wires insulated with the silicone-rubber coating made from the heat-curable silicone rubber composition that contains a curing agent with the total acid value higher than 1.0 KOH/g. Furthermore, an increase in the total acid value of the curing agent causes increase in the spark frequency.

As can be seen from comparison of Application Example 2 with Comparative Example 7, the electric wires insulated with the silicone-rubber coating made from the heat-curable silicone rubber composition that contains a curing agent with bis (4-methylbenzoyl) peroxide obtained from 4-methylbenzoyl chloride as a starting material having a purity higher than of 99.7%, have excellent reliability as they are characterized by a smaller spark frequency and a higher insulation-breakthrough voltage than the electric wires insulated with the silicone-rubber coating made from the heat-curable silicone rubber composition that contains a curing agent with bis (4-methylbenzoyl) peroxide obtained from 4-methylbenzoyl chloride as a starting material having a purity lower than of 99.7%.

Industrial Applicability

Since the heat-curable silicone rubber composition of the invention are suitable for forming molded products which are free of appearance defects such as voids and agglomerated particles in the form of white spots and are suitable for use as a highly-reliable coating that is characterized by excellent high-voltage resistance and insulation properties, it can find wide application in the industry. In particular, the composition may be used for extruding or calender-molding such products as silicone rubber tubes, sheets, or similar products that may require transparency, attractive appearance, and design properties. The composition of the invention may also find wide application in the manufacture of electrical and electronic parts and electrical wires coated with silicone-rubber insulation layer that possesses high reliability and excellent insulating properties.

**Claims**

1. A heat-curable silicone rubber composition that includes a curing agent which is **characterized by** having a total acid value not exceeding 1.0 mg KOH/g and comprising a mixture of a diorganopolysiloxane with bis (4-methylbenzoyl) peroxide produced from 4-methylbenzoyl chloride of 99.7% or higher purity used as a starting material.

2. The heat-curable silicone rubber composition of Claim 1, wherein the diorganopolysiloxane is a dimethylpolysiloxane.

3. A method of manufacturing a cured body of a silicone rubber, **characterized by** thermally curing a heat-curable silicone rubber composition that includes a curing agent having a total acid value not exceeding 1.0 mg KOH/g and that comprises a mixture of a diorganopolysiloxane with bis (4-methylbenzoyl) peroxide produced from 4-methylbenzoyl chloride of 99.7% or higher purity used as a starting material.

4. A molded body of a silicone rubber produced by the method of manufacturing a cured body according to Claim 3.

5. An electric wire coated with a silicone rubber, a coating layer of which is made from the heat-curable silicone rubber composition of Claim 1.

6. A curing agent for a heat-curable silicone rubber composition, said curing agent being **characterized by** having a total acid value not exceeding 1.0 mg KOH/g and comprising a mixture of a diorganopolysiloxane with bis (4-methylbenzoyl) peroxide produced from 4-methylbenzoyl chloride of 99.7% or higher purity as a starting material.

**Patentansprüche**

1. Wärmehärtbare Siliconkautschukzusammensetzung, die ein Härtungsmittel enthält, das durch eine Gesamtsäurezahl, die 1,0 mg KOH/g nicht übersteigt, **gekennzeichnet** ist und eine Mischung aus einem Diorganopolysiloxan mit Bis(4-methylbenzoyl)peroxid, das aus 4-Methylbenzoylchlorid mit einer 99,7%igen oder höheren Reinheit, welches als Ausgangsmaterial verwendet wurde, hergestellt ist, enthält.

2. Wärmehärtbare Siliconkautschukzusammensetzung nach Anspruch 1, wobei das Diorganopolysiloxan ein Dimethylpolysiloxan ist.

3. Verfahren zur Herstellung eines gehärteten Körpers aus einem Siliconkautschuk, **gekennzeichnet durch** thermisches Härten einer wärmehärtbaren Siliconkautschukzusammensetzung, die ein Härtungsmittel enthält, das eine Gesamtsäurezahl, die 1,0 mg KOH/g nicht übersteigt, aufweist und eine Mischung aus einem Diorganopolysiloxan mit Bis(4-methylbenzoyl)peroxid, das aus 4-Methylbenzoylchlorid mit einer 99,7%igen oder höheren Reinheit, welches als Ausgangsmaterial verwendet wurde, hergestellt ist, enthält.

4. Geformter Körper aus einem Siliconkautschuk, der nach dem Verfahren zur Herstellung eines gehärteten Körpers gemäß Anspruch 3 hergesellt ist.

5. Elektrodraht, der mit einem Siliconkautschuk beschichtet ist, wobei eine Überzugsschicht desselben aus der wärmehärtbaren Siliconkautschukzusammensetzung nach Anspruch 1 hergestellt ist.

6. Härtungsmittel für eine wärmehärtbare Siliconkautschukzusammensetzung, wobei das Härtungsmittel durch eine Gesamtsäurezahl, die 1,0 mg KOH/g nicht übersteigt, **gekennzeichnet** ist und eine Mischung aus einem Diorganopolysiloxan mit Bis(4-methylbenzoyl)peroxid, das aus 4-Methylbenzoylchlorid mit einer 99,7%igen oder höheren Reinheit, welches als Ausgangsmaterial verwendet wurde, hergestellt ist, enthält.

**Revendications**

1. Composition de caoutchouc de silicone vulcanisable à la chaleur qui inclut un agent de vulcanisation qui est **caractérisé en ce qu'**il présente un indice d'acide total n'excédant pas 1,0 mg KOH/g et comprend un mélange de diorganopolysiloxane avec du peroxyde de bis(4-méthylbenzoyle) produit à partir de chlorure de 4-méthylbenzoyle d'une pureté de 99,7 % ou plus, utilisé en tant que matière de départ.

2. Composition de caoutchouc de silicone vulcanisable à la chaleur selon la revendication 1, dans laquelle le diorganopolysiloxane est un diméthylpolysiloxane.

3. Procédé de fabrication d'un corps vulcanisé de caoutchouc de silicone, **caractérisé par** la vulcanisation thermique d'une composition de caoutchouc de silicone vulcanisable à la chaleur qui inclut un agent de vulcanisation ayant un indice d'acide total n'excédant pas 1,0 mg KOH/g et qui comprend un mélange de diorganopolysiloxane avec du peroxyde de bis(4-méthylbenzoyle) produit à partir de chlorure de 4-méthylbenzoyle d'une pureté de 99,7 % ou plus, utilisé en tant que matière de départ.

4.  Corps moulé de caoutchouc de silicone produit par le procédé de fabrication d'un corps vulcanisé selon la revendication 3.

5.  Fil électrique revêtu avec un caoutchouc de silicone, dont une couche de revêtement est constituée de la composition de caoutchouc de silicone vulcanisable à la chaleur de la revendication 1.

6.  Agent de vulcanisation pour une composition de caoutchouc de silicone vulcanisable à la chaleur, ledit agent de vulcanisation étant **caractérisé en ce qu'**il présente un indice d'acide total n'excédant pas 1,0 mg KOH/g et comprend un mélange de diorganopolysiloxane avec du peroxyde de bis(4-méthylbenzoyle) produit à partir de chlorure de 4-méthylbenzoyle d'une pureté de 99,7 % ou plus en tant que matière de départ.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S62185750 B
- US 4743671 A
- JP KOKAIH11246763 A
- US 6294636 B
- JP KOKAI200053918 A
- JP KOKAI2000160014 A
- JP KOKAI2003327830 A
- JP KOKAIH11116808 A